# EUROPÄISCHE PATENTSCHRIFT

(11) **EP 0 658 513 B1**
(45) Veröffentlichungstag und Bekanntmachung des Hinweises auf die Patenterteilung: **09.06.1999**
(21) Anmeldenummer: 94119307.0
(22) Anmeldetag: 07.12.1994
(51) Int. Cl.: C01B 33/16, C04B 30/00

(54) **Verfahren zur Herstellung von Xerogelen**
Process for preparing xerogels
Procédé de préparation de xérogels

(30) Priorität: 14.12.1993 DE 4342548
(43) Veröffentlichungstag der Anmeldung: 21.06.1995
(73) Patentinhaber: CABOT CORPORATION, Boston, MA 02109 (US)
(72) Erfinder: Jansen, Rolf-Michael, Dr., D-65799 Kelkheim (DE); Zimmermann, Andreas, Dr., D-64347 Griesheim (DE); Jacquinot, Eric, F-60350 Attichy (FR); Smith, Douglas M., Prof., Albuquerque, NM 87106 (US)
(74) Vertreter: Luderschmidt, Schüler & Partner GbR

(56) Entgegenhaltungen:
- DE-C- 837 384
- GB-A- 682 574
- CHEMISCHES ZENTRALBLATT, Nr. 20, 1965, Berlin, D E; Zusammenfassung Nr. 2187, *das ganze Zusammen fassung * & PRZEMYSL CHEM., Band 41, 1962, Seite n 87 - 90, F. POLAK ET AL.
- CHEMICAL ABSTRACTS, vol. 81, no. 14, 7. Oktober 1974, Columbus, Ohio, US; abstract no. 82740a, Seite 328 ;

## Beschreibung

Die Erfindung betrifft ein Verfahren zur Herstellung modifizierter SiO₂-Gele, im folgenden "Xerogele" genannt.

Die hergestellten Xerogele sind den üblichen SiO₂-Aerogelen verwandt, aber nicht mit ihnen identisch.

SiO₂-Aerogele sind dafür bekannt, daß sie hervorragende Isolationswirkung besitzen. Sie werden beispielsweise durch saure Hydrolyse von Tetraethylorthosilikat in Ethanol hergestellt. Bei der Hydrolyse entsteht ein Gel, dessen Struktur durch die Temperatur, den pH-Wert und die Dauer des Gelierprozesses bestimmt ist. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d. h. es tritt auch kein Schrumpfen des Gels während der Trocknung auf. Auf dieser Trocknungstechnik basierende Herstellverfahren sind bekannt, z. B. aus EP-A-0 396 076 oder WO 92 03378. Diese Technik erfordert aber beispielsweise bei der Verwendung von Ethanol eine Temperatur über 240°C und Drücke über 40 bar. Der Austausch von Ethanol gegen CO₂ vor der Trocknung erniedrigt zwar die Trocknungstemperatur auf ca. 40°C, der benötigte Druck liegt aber dann bei 80 bar.

In der GB-A-682574 wird ein Verfahren offenbart, bei dem man SiO₂-Gele so lange mit einem organischen Lösungsmittel wäscht, bis sie wasserfrei sind, die SiO₂-Gele mit einem Silylierungsmittel umsetzt und die silylierten Gele unterkritisch trocknet.

Im Chemischen Zentralblatt Nr. 20, (1965) 2187 wird ein Verfahren zur Gelherstellung offenbart, bei dem eine Wasserglaslösung mit Hilfe eines Kationentauschers auf einen pH-Wert ≤ 2 gebracht wird und die dabei entstehende Kieselsäure durch Zugabe einer Base wie NaOH zu einem SiO₂-Gel polymerisiert.

Es wurde nun gefunden, daß man SiO₂-Gele bei unterkritischen Bedingungen trocknen kann (d.h. bei der Trocknung liegen eine Flüssigphase und eine Gasphase vor), wenn man sie vor der Trocknung mit einem Silylierungsmittel umsetzt. Die erhaltenen Produkte werden im folgenden als "Xerogele" bezeichnet. Sie sind hervorragende Wärmeisolationsmittel.

Gegenstand der Erfindung ist ein Verfahren zur Herstellung von Xerogelen, das dadurch gekennzeichnet ist, daß man
a) eine wäßrige Wasserglaslösung mit Hilfe eines sauren Ionentauscherharzes oder einer Mineralsäure auf einen pH-Wert ≤ 2,2 bringt.
b) die dabei entstandene Kieselsäure durch Zugabe einer Base zu einem SiO₂-Gel polymerisiert und, falls in Schritt a) eine Mineralsäure benutzt wurde, das Gel mit Wasser elektrolytfrei wäscht,
c) das in Schritt b) erhaltene SiO₂-Gel bei 20 bis 90 °C und einem pH-Wert von 6 bis 11 für eine Dauer von 1 bis 48 Stunden altern läßt,
d) das in Schritt c) erhaltene Gel mit einem organischen Lösungsmittel so lange wäscht, bis der Wassergehalt des Gels ≤ 5 Gew. - % ist,
e) das in Schritt d) erhaltene Gel mit einem Silylierungsmittel umsetzt,
f) das in Schritt e) erhaltene silylierte Gel bei -30 bis 200 °C und 0,0001 bis 20 bar trocknet.

In Schritt a) wird vorzugsweise ein saures Ionentauscherharz eingesetzt; dabei sind vor allem solche geeignet, die Sulfonsäuregruppen enthalten. Falls man Mineralsäuren einsetzt, sind vor allem Salzsäure und Schwefelsäure geeignet. Als Wasserglas wird im allgemeinen Natrium- oder Kaliumwasserglas verwendet.

In Schritt b) wird als Base Im allgemeinen NH₄OH, NaOH, KOH, Al(OH)₃ oder kolloidale Kieselsäure eingesetzt. Falls In Schritt a) eine Mineralsäure verwendet wurde, wird das mit Hilfe der Base erzeugte SiO₂-Gel mit Wasser elektrolytfrei gewaschen; vorzugsweise wird dabei solange gewaschen, bis das ablaufende Waschwasser dieselbe elektrische Leitfähigkeit hat wie entmineralisiertes Wasser.

In Schritt c) läßt man das Gel altern, und zwar im allgemeinen bei 20 bis 90°C, vorzugsweise bei 20 bis 70°C, und einem pH-Wert von 6 bis 11, vorzugsweise 6 bis 9. Die Zeit dafür beträgt im allgemeinen 1 bis 48 Stunden, insbesondere 1 bis 24 Stunden.

In Schrittd) wäscht man das Gel vorzugsweise solange mit einem organischen Lösungsmittel, bis der Wassergehalt des Gels kleiner als 2 Gew.- % ist. Als Lösungsmittel werden im allgemeinen aliphatische Alkohole, Ether, Ester oder Ketone, oder aliphatische oder aromatische Kohlenwasserstoffe verwendet. Bevorzugte Lösungsmittel sind Methanol, Ethanol, Aceton, Tetrahydrofuran, Essigsäureethylester, Dioxan, n-Hexan, Toluol. Man kann auch Gemische aus den genannten Lösungsmitteln verwenden. Man kann auch zuerst das Wasser mit einem Alkohol auswaschen und dann diesen mit einem Kohlenwasserstoff auswaschen.

Die Schritte a) , b) und d) werden im allgemeinen bei einer Temperatur zwischen dem Gefrierpunkt der Lösung un 70°C durchgeführt.

In Schritte) wird das lösungsmittelhaltige Gel mit einem Silylierungsmittel umgesetzt. Als Silylierungsmittel werden im allgemeinen Silane der Formeln R¹₄₋ₙSiClₙ oder R¹₄₋ₙSi(OR²)ₙ mit n = 1 bis 3 eingesatzt, wobei R¹ und R² unabhängig voneinander C₁-C₆-Alkyl, Cyclohexyl oder Phenyl sind. Auch Silazane sind geeignet. Vorzugsweise verwendet man Mono-, Di- oder Trimethylchlorsilan, Trimethylmethoxysilan oder Hexamethyldisilazan. Die Umsetzung wird Im allgemelnen bei 20 bis 100°C, vorzugsweise 30 bis 70°C durchgeführt, wenn nötig in einem Lösungsmittel.

Vor Schritt f) wird das silylierte Gel vorzugsweise mit einem protischen oder aprotischen Lösungsmittel gewaschen, bis unumgesetztes Silylierungsmittel im wesentlichen entfernt ist (Restgehalt ≤ 1 Gew.-%). Geeignete Lösungsmittel sind dabei die bei Schritt d) genannten. Analog sind die dort als bevorzugt genannten Lösungsmittel auch hier bevorzugt.

In Schrittf) wird das silylierte, und vorzugsweise danach gewaschene Gel bei Temperaturen von -30 bis 200°C, vorzugsweise 0 bis 100°C, sowie Drücken von 0,001 bis 20 bar, vorzugsweise 0,01 bis 5 bar, Insbesondere 0,1 bis 2 bar, getrocknet. Höhere Temperaturen als 200°C und/oder höhere Drücke als 20 bar sind ohne weiteres möglich, aber sie sind mit überflüssige m Aufwand verbunden und bringen keine Vorteile mit sich, Der Vorteil des erfindungsgemäßen Verfahrens liegt darin, daß bei der Trocknung Temperaturen und Drücke genügen, die für die üblichen Lösungsmittel weit unter deren kritischen Temperaturen und Drücken liegen. Die Trocknung wird im allgemeinen so lange fortgeführt, bis das Gel einen Lösungsmittel-Restgehalt von weniger als 0,1 Gew.-% hat.

Das erfindungsgemäße Verfahren soll an einem Beispiel verdeutlicht werden.

### Beispiel

1 l einer Natriumwasserglaslösung (mit einem Gehalt von 8 Gew.- % SiO₂ und einem Na₂O:SiO₂ Verhältnis von 2:3) wurde zusammen mit 0,5 l eines sauren lonentauscherharzes (Styroldivinylbenzolcopolymer mit Sulfonsäuregruppen, handelsüblich unter dem Namen ®Duolite C20) gerührt, bis der pH der wäßrigen Lösung = 1,5 war. Anschließend wurde das lonentauscherharz abfiltriert und die wäßrige Lösung mit 0,5 molarer NH₄OH-Lösung auf einen pH von 4 eingestellt. Danach wurde das entstandene Gel noch 24 Stunden bei 50°C gereift und anschließend das Wasser mit 3 l Ethanol extrahiert. Aus dem so hergestellten Gel wurde das Ethanol mit 1,5 l n-Hexan bei 50°C extrahiert. Anschließend wurde das hexanhaltige Gel mit Trimethylchlorsilan (TMCS) silyliert (0,05 g TMCS pro Gramm nasses Gel), dann wieder mit 0,5 l n-Hexan gewaschen. Die Trocknung des Gels erfolgte an Luft (3 Stunden bei 40°C, dann 2 Stunden bei 50°C und 12 Stunden bei 150°C).

Das so erhaltene, transparente Xerogel hatte eine Dichte von 0,13 g/cm³. Die spezifische Oberfläche lag bei 950 m²/g. Der λ-Wert lag bei 0,016 W/mK.

## Patentansprüche

1. Verfahren zur Herstellung von Xerogelen, dadurch gekennzeichnet, daß man
a) eine wäßrige Wasserglaslösung mit Hilfe eines sauren lonentauscherharzes oder einer Mineralsäure auf einen pH-Wert ≤ 2,2 bringt,
b) die dabei entstandene Kieselsäure durch Zugabe einer Base zu einem SiO₂-Gel polymerisiert und, falls in Schritt a) eine Mineralsäure benutzt wurde, das Gel mit Wasser elektrolytfrei wäscht,
c) das in Schritt b) erhaltene SiO₂-Gel bei 20 bis 90°C und einem pH-Wert von 6 bis 11 für eine Dauer von 1 bis 48 Stunden altern läßt,
d) das in Schritt c) erhaltene Gel mit einem organischen Lösungsmittel solange wäscht, bis der Wassergehalt des Gels ≤ 5 Gew.-% ist,
e) das in Schritt d) erhaltene Gel mit einem Silylierungsmittel umsetzt,
f) das in Schritt e) erhaltene silylierte Gel bei -30 bis 200°C und 0,001 bis 20 bar trocknet.

2. Verfahren nach Anspruch 1, dadurch gekennzeichnet, daß man in Schritt a) ein saures lonentauscherharz einsetzt.

3. Verfahren nach Anspruch 1 oder 2, dadurch gekennzeichnet, daß man in Schritt b) als Base NH₄OH, NaOH, KOH, Al(OH)₃ oder kolloidale Kieselsäure einsetzt.

4. Verfahren nach einem der Ansprüche 1 bis 3, dadurch gekennzeichnet, daß der pH-Wert in Schritt c) 6 bis 9 beträgt.

5. Verfahren nach einem der Ansprüche 1 bis 4, dadurch gekennzeichnet, daß die Dauer der Alterung in Schritt c) 1 bis 24 Stunden beträgt.

6. Verfahren nach einem der Ansprüche 1 bis 5, dadurch gekennzeichnet, daß man in Schritt d) das Gel solange wäscht, bis sein Wassergehalt ≤ 2 Gew.- % ist.

7. Verfahren nach einem der Ansprüche 1 bis 6, dadurch gekennzeichnet, daß man in Schritt d) als organisches Lösungsmittel Methanol, Ethanol, Aceton, Tetrahydrofuran, Essigsäureethylester, Dioxan, n-Hexan oder Toluol einsetzt.

8. Verfahren nach einem der Ansprüche 1 bis 7, dadurch gekennzeichnet, daß man in Schritt e) als Silylierungsmittel Mono-, Di- oder Trimethylchlorsilan, Trimethylmethoxysilan oder Hexamethyldisilazan einsetzt.

9. Verfahren nach einem der Ansprüche 1 bis 8, dadurch gekennzeichnet, daß man das in Schritt e) erhaltene silylierte Gel mit einem protischen oder aprotischen Lösungsmittel wäscht, bevor man es in Schritt e) trocknet.

10. Verfahren nach einem der Ansprüche 1 bis 9, dadurch gekennzeichnet, daß man in Schritt f) das silylierte Gel bei 0 bis 100°C trocknet.

11. Verfahren nach einem der Ansprüche 1 bis 10, dadurch gekennzeichnet, daß man das silylierte Gel in Schritt f) bei 0,01 bis 5 bar trocknet.

12. Verfahren nach einem der Ansprüche 1 bis 10, dadurch gekennzeichnet, daß man das silylierte Gel in Schritt f) bei 0,1 bis 2 bar trocknet.

## Claims

1. A process for preparing xerogels, wherein
a) an aqueous waterglass solution is brought to a pH of ≤ 2.2 with the aid of an acid ion-exchange resin or of a mineral acid,
b) the resultant silica is polymerized to give an SiO₂ gel by adding a base and, if a mineral acid has been used in step a), the gel is washed with water until free from electrolytes,
c) the SiO₂ gel obtained in step b) is allowed to age at from 20 to 90°C and at a pH of from 6 to 11 for from 1 to 48 hours,
d) the gel obtained in step c) is washed with an organic solvent until the water content of the gel is ≤ 5% by weight,
e) the gel obtained in step d) is reacted with a silylating agent, and
f) the silylated gel obtained in step e) is dried at from -30 to 200°C and from 0.001 to 20 bar.

2. A process as claimed in claim 1, wherein an acid ion-exchange resin is used in step a).

3. A process as claimed in claim 1 or 2, wherein the base used in step b) is NH₄OH, NaOH, KOH, Al(OH)₃ or colloidal silica.

4. A process as claimed in one of claims 1 to 3, wherein the pH in step c) is from 6 to 9.

5. A process as claimed in one of claims 1 to 4, wherein the duration of the aging in step c) is from 1 to 24 hours.

6. A process as claimed in one of claims 1 to 5, wherein, in step d), the gel is washed until its water content is ≤ 2% by weight.

7. A process as claimed in one of claims 1 to 6, wherein, in step d), the organic solvent used is methanol, ethanol, acetone, tetrahydrofuran, ethyl acetate, dioxane, n-hexane or toluene.

8. A process as claimed in one of claims 1 to 7, wherein, in step e), the silylating agent used is mono-, di- or trimethylchlorosilane, trimethylmethoxysilane or hexamethyldisilazane.

9. A process as claimed in one of claims 1 to 8, wherein the silylated gel obtained in step e) is washed with a protic or aprotic solvent before being dried in step e).

10. A process as claimed in one of claims 1 to 9, wherein, in step f), the silylated gel is dried at from 0 to 100°C.

11. A process as claimed in one of claims 1 to 10, wherein, in step f), the silylated gel is dried at from 0.01 to 5 bar.

12. A process as claimed in one of claims 1 to 10, wherein, in step f), the silylated gel is dried at from 0.1 to 2 bar.

## Revendications

1. Procédé de préparation de xérogels, caractérisé en ce que
a) on amène une solution aqueuse de verre soluble à une valeur de pH ≤ 2,2 à l'aide d'une résine échangeuse d'ions acide ou d'un acide minéral,
b) on polymérise l'acide silicique obtenu par addition d'une base pour former un gel de SiO₂ et, dans le cas où dans l'étape a) on a fait usage d'un acide minéral, on lave le gel avec de l'eau jusqu'à ce qu'il soit exempt d'électrolyte,
c) on laisse vieillir le gel de SiO₂ obtenu dans l'étape b) à 20 jusqu'à 90°C et à une valeur de pH de 6 à 11 pendant une durée de 1 à 48 heures,
d) on lave le gel obtenu dans l'étape c) avec un solvant organique suffisamment longtemps pour que la teneur en eau du gel soit ≤ à 5 % en poids,
e) on fait réagir le gel obtenu dans l'étape d) avec un agent de silylation,
f) on sèche le gel silylé obtenu dans l'étape e) à -30 jusqu'à 200°C et à 0,001 à 20 bars.

2. Procédé suivant la revendication 1, caractérisé en ce qu'on met en oeuvre dans l'étape a) une résine échangeuse d'ions acide.

3. Procédé suivant l'une ou l'autre des revendications 1 et 2, caractérisé en ce que, dans l'étape b), on met en oeuvre, comme base, du NH₄OH, du NaOH, du KOH, du Al(OH)₃ ou de l'acide silicique colloïdal.

4. Procédé suivant l'une des revendications 1 à 3, caractérisé en ce que la valeur de pH est de 6 à 9 dans l'étape c).

5. Procédé suivant l'une des revendications 1 à 4, caractérisé en ce que la durée du vieillissement dans l'étape c) est de 1 à 24 heures.

6. Procédé suivant l'une des revendications 1 à 5, caractérisé en ce que, dans l'étape d), on lave le gel suffisamment longtemps pour que sa teneur en eau soit ≤ 2 % en poids.

7. Procédé suivant l'une des revendications 1 à 6, caractérisé en ce que, dans l'étape d), on met en oeuvre, comme solvant organique, du méthanol, de l'éthanol, de l'acétone, du tétrahydrofuranne, de l'acétate d'éthyle, du dioxane, du n-hexane ou du toluène.

8. Procédé suivant l'une des revendications 1 à 7, caractérisé en ce que, dans l'étape e), on met en oeuvre, comme agent de silylation, du monométhylchlorosilane, du diméthylchlorosilane, du triméthylchlorosilane, du triméthylméthoxysilane ou de l'hexaméthyldisilazane.

9. Procédé suivant l'une des revendications 1 à 8, caractérisé en ce qu'on lave le gel silylé obtenu dans l'étape e) avec un solvant protique ou aprotique avant de le sécher dans l'étape f).

10. Procédé suivant l'une des revendications 1 à 9, caractérisé en ce que, dans l'étape f), on sèche le gel silylé à 0 jusqu'à 100°C.

11. Procédé suivant l'une des revendications 1 à 10, caractérisé en ce qu'on sèche le gel silylé dans l'étape f) à 0,01 jusqu'à 5 bars.

12. Procédé suivant l'une des revendications 1 à 10, caractérisé en ce qu'on sèche le gel silylé dans l'étape f) à 0,1 jusqu'à 2 bars.
